# EUROPÄISCHE PATENTSCHRIFT

(11) **EP 0 769 515 B1**
(45) Veröffentlichungstag und Bekanntmachung des Hinweises auf die Patenterteilung: **23.10.2002**
(21) Anmeldenummer: 96113133.1
(22) Anmeldetag: 16.08.1996
(51) Int. Cl.: C08J 5/12

(54) **Verfahren zur Herstellung von Verbundgegenständen aus Polyestern und Elastomeren**
Process for the preparation of composite articles from polyesters and elastomers
Procédé pour la préparation d'articles composites de polyesters et d'élatomères

(30) Priorität: 20.10.1995 DE 19539127
(43) Veröffentlichungstag der Anmeldung: 23.04.1997
(73) Patentinhaber: Degussa AG, 40474 Düsseldorf (DE)
(72) Erfinder: Schmidt, Friedrich Georg, Dr., 45721 Haltern (DE); Heuer, Horst, 45721 Haltern (DE)

(56) Entgegenhaltungen:
- EP-A- 0 375 867
- EP-A- 0 422 358
- EP-A- 0 644 225
- EP-A- 0 683 195

## Beschreibung

Die vorliegende Erfindung betrifft ein Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist. Die Erfindung betrifft weiterhin die nach diesem Verfahren erhaltenen Gegenstände.

Häufig kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Gummielastizität oder hohe Härte und Steifheit auf einer und Rutschfestigkeit auf der anderen Seite.

Um Bauteile mit Eigenschaften auszurüsten, die ein einziger Werkstoff nicht beitragen kann, setzt man sie aus Teilen verschiedener Werkstoffe zusammen. Für die Funktionstüchtigkeit derartiger Gegenstände ist häufig eine feste Haftung zwischen den Teilen aus verschiedenen Werkstoffen eine notwendige Voraussetzung.

Die technische Aufgabe, Kautschuke und Thermoplaste fest miteinander zu verbinden, ist alt und bisher auf verschiedene, insgesamt nicht befriedigende Arten gelöst.

Verbundwerkstoffe aus thermoplastisch steifen und gummielastischen Formstoffen werden üblicherweise durch Kleben, Verschrauben, Nieten, mechanisches Verkrallen oder unter Verwendung eines Haftvermittlers zusammengefügt. In neuerer Zeit sind interessante Verfahren zur Herstellung eines Verbundes zwischen Formmassen auf Basis von Polyphenylenethern (PPE) und bestimmten, mit Schwefel bzw. Peroxid vulkanisierbaren Kautschuken entwickelt worden (vgl. EP-A-0 196 407 und EP-A-0 315 749).

Die hierbei erzielten Haftfestigkeitswerte sind beachtlich. Nachdem Verbundwerkstoffe der soeben geschilderten Art grundsätzlich herstellbar sind, möchte man aber in der Lage sein, auch Verbundwerkstoffe herzustellen, deren thermoplastische Komponente neben einer hohen Wärmeformbeständigkeit gleichzeitig eine gute Lösemittelbeständigkeit, Stabilität bei Bewitterung sowie ein ausgezeichnetes Gleitreibungsverhalten aufweist.

Obwohl bekannt ist, daß die aus den angeführten Anmeldungen bekannten Verfahren an bestimmte kritische Parameter geknüpft sind, könnte man grundsätzlich daran denken, den Polyphenylenether durch andere Thermoplasten zu ersetzen, die den genannten Anforderungen besser gerecht werden. Es hat sich jedoch gezeigt, daß sich beispielsweise mit Polyestern, die bekanntlich den oben genannten Anforderungen gerecht werden, unter den als wesentlich erkannten Verfahrensbedingungen keine ausreichenden Haftungswerte erzielen lassen. Es erschien daher nicht möglich, Verbunde zwischen thermoplastischen Polyestern und Kautschuken herzustellen.

In der EP-A-0 375 867 wird ein Verfahren zur Herstellung solcher Verbunde angegeben, bei denen der Thermoplastanteil zu mindestens 30 % aus einem Umsetzungsprodukt aus einem thermoplastischen Polyester und einem Polyisocyanat besteht. Diese Umsetzungsprodukte haben den Nachteil, daß sie bei hinreichend hoher Konzentration an Polyisocyanat nur in einem sehr engen Verarbeitungsfenster spritzgegossen oder extrudiert werden können.

In der EP-A-0 644 225 wird ein Verfahren beschrieben, bei dem Polyester mit einem nicht beeinträchtigten Verarbeitungsverhalten in einem Verbund mit EP(D)M-Kautschuken eingesetzt werden können. Dieses besteht darin, daß man eine harte Komponente auf Basis eines thermoplastischen Polyesters verwendet, der aliphatische Doppelbindungen enthält, und bei der weichen Komponente von einer Kautschukzusammensetzung ausgeht, die im Kontakt mit der harten Komponente unter üblichen Vulkanisationsbedingungen vulkanisiert wird und ein bestimmtes funktionelles Silan enthält.

Bei Verwendung größerer Mengen an Silanen in der Kautschukkomponente kann hier jedoch eine Haftung an der bei der Vulkanisation üblicherweise verwendeten Metallform auftreten.

Es wurde jetzt überraschend ein weiteres Verfahren gefunden, mit dem Polyester mit einem nicht beeinträchtigten Verarbeitungsverhalten in einem Verbund mit Kautschuken eingesetzt werden können. Dieses besteht darin, daß man eine harte Komponente auf Basis eines thermoplastischen Polyesters, der aliphatische Doppelbindungen enthält, verwendet und bei der weichen Komponente von einer Kautschukzusammensetzung ausgeht, die im Kontakt mit der harten Komponente unter üblichen Vulkanisationsbedingungen vulkanisiert wird und folgende Komponenten enthält:
I. 100 Gew.-Teile eines carboxyl- oder anhydridgruppenhaltigen Kautschuks,
II. 0 bis 300 Gew.-Teile Füllstoffe,
III. 1 bis 10 Gew.-Teile peroxidische Vulkanisationsmittel,
IV. 0 bis 150 Gew.-Teile Weichmacher, sowie
V. mehr als 4 Gew.-Teile einer di- oder polyfunktionellen Verbindung der allgemeinen Formel

   R¹(-Z-CO-CR²=CR³R⁴)ₙ,

   wobei
   R¹ ein beliebiger zwei- oder mehrwertiger Rest oder eine direkte Bindung sein kann, R² bis R⁴ unabhängig voneinander Wasserstoff, Alkyl, Cycloalkyl oder Aryl mit jeweils maximal 20 C-Atomen sein können; Z kann Alkyl, Cycloalkyl, Aryl, S, NH oder 0 bedeuten und n steht für Zahlen größer oder gleich 2, vorzugsweise 2 bis 4.

Die Verwendung von Verbindungen der Formel

R¹(-Z-CO-CR²=CR³R⁴)ₙ

als Vulkanisationsaktivatoren in Kautschukcompounds ist an sich bekannt. Mit ihrer Hilfe soll eine höhere Vernetzungsdichte erzielt werden. Ihre Eignung als Haftvermittler für Verbunde aus Polyestern und Kautschuken war bisher nicht bekannt. Zwar werden in der bereits genannten EP-A-0 375 867 auf 100 Gewichtsteile eines Carboxylgruppen enthaltenden EP(D)M-Kautschuks bis zu 4 Gewichtsteile Vulkanisationsaktivatoren wie z. B. Ethylenglykoldimethacrylat oder Trimethylolpropantrimethacrylat verwendet, doch reicht dies nicht aus, um ohne Zusatz von Polyisocyanat einen festen Verbund mit dem Polyester zu erzielen. Es war daher überraschend, daß bei Einsatz größerer Mengen dieser Verbindungen ein so fester Verbund erhalten wird, daß der Zusatz von Polyisocyanat zum Polyester mit den daraus resultierenden Nachteilen vermieden werden kann.

Über den hier wirksamen Bindungsmechanismus zwischen Polyester und Vulkanisat liegen noch keine gesicherten Erkenntnisse vor.

Im folgenden sollen die einzelnen Bestandteile der harten und der weichen Komponente näher erläutert werden.

Die harte Komponente auf Basis von Polyester kann ein Polyester, eine Polyesterformmasse, ein Polyesterblend oder ein Faserverbundwerkstoff mit Polyestermatrix sein.

Hierbei wird der thermoplastische Polyester in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl. "Polymer Chemistry", Interscience Publ., New York, 1961, S. 111 - 127; Kunststoffhandbuch, Band VIII, C. Hanser Verlag, München, 1973 und Journal of Polymer Science, Part A1, **4**, Seiten 1851 - 1859 (1966)].

Geeignete aromatische Dicarbonsäuren sind z. B. Phthalsäure, Iso- und Terephthalsäure bzw. deren Ester. Die aromatischen Dicarbonsäuren können teilweise durch aliphatische und/oder cycloaliphatische Dicarbonsäuren mit bis zu 12 C-Atomen ersetzt sein. Beispielhaft seien Cyclohexan-1,4-dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure, Tetrahydroisophthalsäure und Tetrahydroterephthalsäure als ungesättigte Dicarbonsäuren genannt.

Als Diolkomponente eignen sich beispielsweise
- Diole der allgemeinen Formel HO-(CH₂)ₙ-OH mit n = 2 bis 12, wie z. B. Ethylenglykol, Propandiol-(1,3), Butandiol-(1,4) und Hexandiol-(1,6),
- Neopentylglykol,
- 1,4-Cyclohexandimethanol,
- ungesättigte Diole, wie z. B. Butendiol-(1,4).

Ein Teil dieser Diole kann durch ein Poly(oxyalkylen)diol mit einem Molekulargewicht bis 3 000, wie z. B. Poly(oxyethylen)diol oder Poly(oxytetramethylen)diol, oder durch verzweigte Alkylendiole, wie z. B. 2-Methyl-1,4-butandiol, ersetzt sein.

Die erfindungsgemäß eingesetzten Polyester weisen sinnvollerweise eine Viskositätszahl J, gemessen nach DIN 53 728 bei 25 °C an einer Lösung in Phenol/1,2-Dichlorbenzol (50 : 50, w/w) mit einer Konzentration von 5 g/l, im Bereich von 80 bis 240 cm³/g auf.

In einer bevorzugten Ausführungsform basiert die Dicarbonsäurekomponente dieses Polyesters auf Terephthalsäure.

In einer besonders bevorzugten Ausführungsform verwendet man Polyester mit einer Dicarbonsäurekomponente auf Basis von Terephthalsäure und einer Diolkomponente, die zu 0 bis 99 Mol-% aus Butandiol-(1,4) und zu 1 bis 100 Mol-% aus Butendiol-(1,4) besteht. Insbesondere besteht die Diolkomponente zu mindestens 8 Mol-% und ganz besonders bevorzugt zu mindestens 15 Mol-% aus Butendiol-(1,4).

Selbstverständlich kann der gewünschte Doppelbindungsgehalt des Polyesters dadurch eingestellt werden, daß man eine Mischung eines doppelbindungshaltigen und beispielsweise eines doppelbindungsfreien Polyesters verwendet.

Polyesterformmassen im Sinne dieser Erfindung sind dem Stand der Technik entsprechende Aufbereitungen von Polyestern, die zur Verbesserung der Verarbeitungseigenschaften oder zur Modifizierung der Gebrauchseigenschaften vorgenommen wurden. Polyesterformmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übrigen Zusatzstoffe insgesamt bis zu 10 %, jeweils bezogen auf die gesamte Formmasse, betragen.

Polyesterblends im Sinne dieser Erfindung sind Formmassen, die aus Polyestern und anderen Polymeren sowie den bei den Polyesterformmassen gebräuchlichen Additiven zusammengesetzt sind. Die Polymerbestandteile können ineinander löslich sein oder der eine Polymerbestandteil in dem anderen dispers verteilt sein, oder beide können miteinander interpenetrierende Netzwerke bilden.

Im Rahmen der vorliegenden Erfindung kann prinzipiell jedes bekannte Polyesterblend verwendet werden. Als Beispiele seien genannt: Blends mit Polycarbonat, schlagzähmodifizierte Polyester, die als Schlagzähkomponente etwa MSA- oder glycidylmethacrylatmodifizierte Kautschuke enthalten, Polyester/Polyamid-Blends, Blends aus Polyestern und Polyolefinen sowie Blends aus Polyestern und PMMA, PMMI, ABS, Epoxyharzen oder Blockcopolyetherester-Elastomeren. Beschrieben sind derartige Systeme beispielsweise in folgenden Publikationen: Polymer Blends, Ed.: E. Martuscelli, R. Palumbo und M. Kryszewski, Plenum Press, New York, 1980; Polymer Alloys III, Ed.: D. Klempner und K. C. Frisch, Plenum Press, New York, 1983; WO-A-87/00850; EP-A-0 037 547; EP-A-0 276 327 sowie H. Saechtling, Kunststoff-Taschenbuch, 25. Auflage, C. Hanser Verlag, München, Wien, 1992.

Der Polyesteranteil in den Polyesterblends sollte hierbei, bezogen auf die Summe aller polymeren Komponenten, mindestens 30 Gew.-% betragen.

Als Faserverbundwerkstoffe mit Polyestermatrix sollen Werkstoffe verstanden werden, die aus ungeschnittenen Verstärkungsfasern oder Geweben daraus einerseits und einer Matrix aus Polyestern, Polyesterformmassen oder Polyesterblends andererseits zusammengesetzt sind.

Faserverbundwerkstoffe mit einer Matrix aus Polyestern, Polyesterformmassen oder Polyesterblends können auf verschiedene Weise hergestellt werden; beispielsweise können mit Polyestern imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyesterfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Die im erfindungsgemäßen Verfahren eingesetzte Kautschukzusammensetzung enthält einen Carboxyl- bzw. Anhydridgruppen enthaltenden Kautschuk, der beispielsweise in bekannter Weise durch Carboxylierung mit ungesättigten Säuren oder Säurederivaten, wie z. B. Maleinsäure oder Maleinsäureanhydrid (MSA), hergestellt wird (vgl. z. B. US-PS 40 10 223). Es ist auch möglich, diese Kautschuke durch Copolymerisation mit ungesättigten Säuren wie z. B. Acrylsäure herzustellen. Grundsätzlich sind alle Carboxyl- oder Anhydridgruppen enthaltenden Kautschuke geeignet, die sich auf bekannte Weise herstellen lassen.

Eine generelle Untergrenze für den Carboxylgehalt oder die Säurezahl läßt sich nicht angeben, da diese je nach verwendetem Kautschuktyp und je nach Art und Menge der eingesetzten Verbindung R¹(-Z-CO-CR²=CR³R⁴)ₙ unterschiedlich ist. Als Untergrenze soll daher der Wert angesehen werden, bei dem sich die erfindungsgemäße Wirkung gerade noch einstellt. Dieser Wert läßt sich für das jeweils gewählte System durch wenige Routineversuche ermitteln.

Der für die weiche Komponente verwendete Kautschuk kann beispielsweise ein EP(D)M-Kautschuk, ein SB-Kautschuk (als E-SBR oder L-SBR), BR, NR, IR, IIR, CIIR, BIIR, NBR, CR, ein styrolhaltiges Blockcopolymer und/oder ein Polyalkenylen sein.

EP(D)M-Kautschuke sind Kautschuke, die in bekannter Weise durch Polymerisation eines Gemisches aus Ethylen und Propylen und gegebenenfalls eines Diens in Gegenwart eines Ziegler-Natta-Katalysators hergestellt werden.

Der EPDM-Kautschuk wird durch Polymerisation eines Gemisches aus
mehr als 25 Gew.-% Ethylen
mehr als 25 Gew.-% Propylen und
bis 10 Gew.-%, insbesondere 1 bis 3 Gew.-% eines vorzugsweise nicht konjugierten Diens wie Bicyclo(2.2.1)-heptadien, Hexadien-1,4, Dicyclopentadien und insbesondere 5-Ethylidennorbornen
hergestellt.

Beim SB-Kautschuk kann es sich sowohl um E- als auch um L-SBR mit einem Styrolanteil bis maximal etwa 40 Gewichtsprozent handeln.

E-SBR wird in bekannter Weise durch Polymerisation in Emulsion hergestellt, während L-SBR durch Polymerisation in Lösung hergestellt wird.

Butadienkautschuk (BR) kann in bekannter Weise beispielsweise durch Polymerisation mit Hilfe von Li- oder Co-Katalysatoren hergestellt werden. Die Verknüpfungsart hat hierbei keinen Einfluß auf die Eignung.

Naturkautschuk (NR) wird üblicherweise in der cis-1,4-Konfiguration verwendet. Jedoch ist im Rahmen dieser Erfindung auch die trans-1,4-Konfiguration geeignet.

Isoprenkautschuk (IR) kann unabhängig davon verwendet werden, ob er z. B. mit Ti- oder Li-Katalysatoren hergestellt wurde. Der cis-1,4/trans-1,4-bzw. 1,2- und 3,4-Gehalt hat keinen Einfluß auf die Haftungseigenschaften.

Isobuten-Isopren-Kautschuk (IIR) kann als solcher oder in halogenierter Form (CIIR bzw. BIIR) verwendet werden.

Nitrilkautschuk (NBR) wird durch Copolymerisation von Butadien und Acrylnitril in Masseverhältnissen von ca. 51 : 48 bis 82 : 18 gewonnen. Seine Herstellung erfolgt praktisch ausschließlich in wäßriger Emulsion. Die dabei resultierenden Emulsionen werden für den Einsatz im Rahmen dieser Erfindung zum Festkautschuk aufgearbeitet.

Chloroprenkautschuk (CR) wird üblicherweise durch radikalische Emulsionspolymerisation hergestellt. Dabei wird das Monomere in unterschiedlichen Strukturen in das Polymer eingebaut. Der cis-1,4/trans-1,4- bzw. 1,2- und 3,4-Gehalt bzw. der Anteil an Kopf/Kopf- und Kopf/Schwanz-Verknüpfung hat keinen Einfluß auf die Haftungseigenschaften.

Als styrolhaltiges Blockcopolymer können alle bekannten Typen auf Basis von Styrol/Butadien oder Styrol/Isopren verwendet werden. Beispiele hierfür sind SB, SBS und SIS sowie entsprechende Typen, die eine größere Anzahl von Blöcken enthalten. Die Copolymeren können hierbei linear oder verzweigt sein. Darüber hinaus kann die Weichphase hydriert sein; entsprechende Blockcopolymere werden auch als Styrol-Ethylen-Butylen-Styrol-Blockcopolymere (SEBS) bezeichnet.

Polyalkenylene werden durch ringöffnende bzw. ringerweiternde Polymerisation von Cycloalkenen dargestellt [siehe K. J. Ivin, T. Saegusa, "Ringopening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen Molekulargewichten sind nach literaturbekannten Methoden erhältlich.

Im Rahmen dieser Erfindung wird bevorzugt ein Kautschuk verwendet, der aus 30 bis 100 Gew.-Teilen eines EP(D)M-Kautschuks und 70 bis 0 Gew.-Teilen anderer Kautschuke besteht.

Geeignete carboxylierte EPM-Kautschuke werden z. B. von der Fa. Exxon Chemical GmbH, Köln unter der Bezeichnung EXXELOR VA 1801, VA 1803 oder VA 1806 hergestellt.

Ein geeigneter carboxylierter EPDM-Kautschuk ist z. B. maleinsäureanhydrid-modifiziertes BUNA HÜLS AP der Firma Hüls AG, Marl (Versuchsprodukt X 4496).

Geeignete mit Carboxylgruppen versehene NBR-Kautschuke werden z. B. von Goodyear Tire & Rubber Company, Akron, Ohio, USA, unter der Bezeichnung CHEMIGUM® NX 775 und von Zeon Europe GmbH, Düsseldorf, Deutschland unter den Bezeichnungen NIPOL 1472 und NIPOL 1072 vertrieben.

Im übrigen ist die Herstellung funktionalisierter Kautschuke, beispielsweise durch Kneten des Kautschuks mit Maleinsäureanhydrid bei höherer Temperatur und gegebenenfalls in Anwesenheit von Radikalstartern, Stand der Technik.

Die erfindungsgemäß verwendbaren funktionalisierten Kautschuke müssen jedoch nicht unbedingt per se eingesetzt werden. Sie können auch während der Vulkanisation in situ hergestellt werden. Zu diesem Zweck wird ein handelsüblicher, unfunktionalisierter Kautschuk zusammen mit einer Verbindung eingesetzt, die mindestens eine C-C-Doppelbindung und/oder C-C-Dreifachbindung und mindestens eine Carboxyl- oder Anhydridgruppe enthält. Beispielsweise können hier Maleinsäureanhydrid, Maleinsäuremonoalkylester, Fumarsäure, Tetrahydrophthalsäureanhydrid, Acrylsäure, Methacrylsäure, Itaconsäure, Sorbinsäure, Ölsäure, Linolsäure, Propiolsäure, Phenylpropiolsäure, Addukte von Maleinsäureanhydrid mit z. B. Linolsäure, Addukte von Maleinsäureanhydrid mit niedermolekularem Polybutadien oder entsprechende Addukte mit niedermolekularem Polyoctenamer verwendet werden. Hierbei kann jeder beliebige Kautschuk eingesetzt werden.

Eine weitere Ausführungsform besteht darin, daß man ein Gemisch aus einem funktionalisierten Kautschuk und einem unfunktionalisierten Kautschuk einsetzt.

Als Füllstoffe eignen sich alle Stoffe, die üblicherweise in Kautschuken eingesetzt werden, wie z. B. Ruß, Kieselsäure, Silikate, Calciumcarbonat, Zinkoxid und Talkum. Bei Verwendung hochaktiver Füllstoffe wird zum Erreichen einer Verbundhaftung eine erhöhte Menge der Verbindung R¹(-Z-CO-CR²=CR³R⁴)ₙ benötigt.

Geeignete Weichmacher sind insbesondere naphthenische und/oder aliphatische Öle oder spezielle, in der Kautschuktechnologie übliche Weichmacher wie z. B. Polyalkoholfettsäureester oder Thioether in einer Menge von vorzugsweise bis zu 50 Gewichtsteilen, bezogen auf 100 Gewichtsteile Kautschuk.

Geeignete peroxidische Vulkanisationsmittel sind die dem Fachmann zur Vernetzung von Kautschuken bekannten Peroxide wie z. B. 2,5-Dimethyl-2,5-bis(tert.-butylperoxy)-hexan, Dicumylperoxid, 4,4-Di-tert.-butylperoxy-nbutylvalerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Die Kautschukzusammensetzungen können darüber hinaus weitere Zusätze enthalten, wie z. B. Vulkanisationsverzögerer, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 50 Gew.-Teile aus. Die Herstellung solcher Compounds wird beispielsweise von F.W. Barrow in "Rubber Compounding", erschienen 1988 bei Marcel Dekker Inc., New York und Basel, oder bei W. Kleemann in "Mischungen für die Elastverarbeitung", erschienen 1982 (VEB Deutscher Verlag für Grundstoffindustrie), beschrieben.

Bei den Verbindungen R¹(-Z-CO-CR²=CR³R⁴)ₙ sind wegen ihrer leichten Zugänglichkeit insbesondere Verbindungen mit Z = 0 bevorzugt. Beispielsweise seien 1,4-Butandioldimethylacrylat (BDMA), 1,3-Butandioldimethacrylat, 1,2-Ethandioldiacrylat, 1,2-Ethandioldimethacrylat und Trimethylolpropantrimethacrylat genannt.

Von den Verbindungen R¹(-Z-CO-CR²=CR³R⁴)ₙ werden vorzugsweise maximal 12 Gew.-Teile, bezogen auf 100 Gew.-Teile des Kautschuks, eingesetzt.

Der Verbund aus der harten Komponente auf Polyesterbasis und der elastomeren Komponente wird durch Vulkanisation des Kautschuk-Compounds im Kontakt mit der harten Komponente hergestellt.

Die Gegenstände aus den Polyestern, Polyesterformmassen oder Polyesterblends einerseits und Kautschuk-Compounds andererseits können hierbei einstufig oder zweistufig hergestellt werden. Gegenstände aus Faserverbundwerkstoffen und Kautschuk-Compounds werden zweistufig hergestellt.

Beim zweistufigen Prozeß wird zunächst das steife Formteil beispielsweise durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Beim Beaufschlagen und Ausvulkanisieren nach dem zweistufigen Extrusionsverfahren wird z. B. ein in der ersten Stufe hergestelltes Profil aus dem Thermoplasten, etwa ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des Polyesters, der Polyesterformmasse bzw. des Polyesterblends liegen sollte.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen, denn die zugesetzte Verbindung R¹(-Z-CO-CR²=CR³R⁴)ₙ beeinflußt die Reaktionsbedingungen nicht wesentlich.

Geeignete Massetemperaturen der Kautschukmischung im Zylinder liegen im allgemeinen im Bereich von 40 bis 80 °C, vorzugsweise von 60 bis 70 °C.

Geeignete Vulkanisationstemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Das erfindungsgemäße Verfahren sowie die damit hergestellten Verbunde zeichnen sich durch folgende Vorteile aus:
- Der Verbund ist vorzugsweise in wenigen Minuten hergestellt.
- Die im Verbundsystem eingesetzten Polyester besitzen eine hohe Wärmeformbeständigkeit, gute Lösemittelbeständigkeit, ein ausgezeichnetes Gleitreibungsverhalten sowie eine nur geringe Wasseraufnahme und sind auch im Außenbereich problemlos einsetzbar.
- Der Verbund ist so stark, daß es im Testfall zu einem Kohäsionsbruch im Gummi, nicht jedoch zu einer Trennung an der Phasengrenzfläche kommt.

Aus den Verbunden lassen sich beispielsweise folgende Gegenstände herstellen: gummibeschichtete Walzen, Flansche, Rohr- und Schlauchkupplungen, Dichtungsrahmen, stoß- und strahlungsabsorbierende Bauteile, Federelemente, Schwingungsdämpfer, verstärkte Gummiprofile, Transportbänder, Antriebsriemen, Andruckrollen für Video- und Audio-Band-Geräte, Dichtungen, insbesondere Wellendichtringe, Laufrollen, Kupplungs- und Bremsscheiben, Membranen, Kolben mit Dichtringen, verstärkte Faltenbälge, Pumpengehäuse und -klappen, polyesterverstärkte Gummischläuche etc.

Im folgenden soll die Erfindung beispielhaft erläutert werden.

### Beispiele

Für die Herstellung der Kautschukmischung wurden folgende Materialien verwendet:

EXXELOR VA 1803, ein MSA-(1 %)-modifizierter EPM-Kautschuk der Fa. Exxon Chemical, Köln. Die Eigenschaften des Produkts sind den technischen Informationen der Fa. Exxon Chemical zu entnehmen.
- Sillitin Z86:: Aluminium-Silikat der Fa. Hoffmann Mineral, Neuburg/Donau mit einer spez. Oberfläche von ungefähr 14 m²/g.
- ZnO RS:: Zinkoxid der Fa. Carl Arnsberger, Köln
- Vulkanox HS:: polymerisiertes 2,2,4-Trimethyl-1,2-dihydrochinolin der Fa. Rhein-Chemie, Rheinau
- BDMA:: Butandioldimethacrylat, 75 % auf Ca-Silikat der Fa. Lehmann & Voss
- Perkadox 14/40:: Bis-tert.-butylperoxy-isopropylbenzol, 40%ig auf Kreide und SiO₂ der Fa. Akzo Chemicals, Düren
- Sunpar 2280:: paraffinisch (73 %)-naphthenisch (23 %)-aromatisches (4 %) Öl der Fa. Sun Oil, Belgien

Als Polyestermaterialien wurden folgende Formmassen eingesetzt:
Typ A entspricht einem normalen Polybutylenterephthalat, VESTODUR 1000 der Hüls AG, D-45764 Marl mit einer Lösungsviskosität J von 108 cm³/g.
Typ B entspricht Polybutylenterephthalat mit einem copolykondensierten Anteil von 20 Mol-% 1,4-Buten-2-diol, bezogen auf die gesamte Diolkomponente, und einer Lösungsviskosität J von 106 cm³/g.
Typ C entspricht Polybutylenterephthalat mit einem copolykondensierten Anteil von 30 Mol-% 1,4-Buten-2-diol, bezogen auf die gesamte Diolkomponente, und einer Lösungsviskosität J von 108 cm³/g.

### Herstellung der Kautschukmischungen

Die Herstellung der einzelnen Kautschukmischungen I bis IV erfolgte in einem Batch-Labor-Meßkneter (Fa. Haake). Bei einer Starttemperatur von 60 °C und einer Drehzahl von 64 Upm wurde zunächst 28,57 g des Kautschuks plastifiziert. Innerhalb von etwa fünf Minuten wurde das in der Tabelle 1 angegebene Öl, der in der Tabelle 1 angegebene Füllstoff, 1,43 g Zn0 RS und 0,57 g Vulkanox HS eingearbeitet und weitere drei Minuten homogenisiert. Während dieser Zeit stieg die Temperatur auf ca. 110 °C an. Diese Vormischung wurde anschließend ≥ 24 h bei Raumtemperatur gelagert. Anschließend wurden bei gleichen Bedingungen (60 °C Starttemperatur, 64 Upm) 1,71 g Perkadox 14/40 sowie die in der Tabelle 1 angegebene Menge BDMA innerhalb von ca. vier Minuten homogen eingearbeitet. Dabei stieg die Temperatur der Mischung nicht über 130 °C an.

**Tabelle 1**

| Mischung | EXXELOR VA 1803 [g] | Sillitin Z86 [g] | Sunpar 2280 [g] | BDMA [g] |
|---|---|---|---|---|
| I | 28,57 | 22,86 | 5,71 | - |
| II | 28,57 | 22,86 | 5,71 | 0,43 |
| III | 28,57 | 22,86 | 5,71 | 1,23 |
| IV | 28,57 | 22,86 | 5,71 | 2,03 |

### Herstellung der Verbunde

Von den untersuchten Polyestern wurden Prüfkörper (100 x 100 x 4 mm) im Spritzgießverfahren bei einer Zylindertemperatur von 250 °C hergestellt. Anschließend wurde eine Platte in eine Form aus V2A-Stahl (100 x 100 x 8 mm) gelegt und mit einem 20 mm breiten Stück PTFE-Folie an einer Seite abgedeckt. Die so präparierte Platte wurde in einer hydraulischen Presse (Schwabenthan - Polystat 20T) 20 Minuten bei 180 °C und 200 bar verpreßt.

### Prüfung der Verbundhaftung

Die Prüfung der Verbundhaftung zwischen Polyestermaterial und vulkanisiertem Kautschuk wurde mittels eines Schälversuches in Anlehnung an DIN 53 531 durchgeführt. Dabei wurde das Gummiteil, das durch die Teflonfolie bei der Vulkanisation vom Polyestermaterial getrennt gehalten wurde, so eingespannt, daß bei den Schälversuchen der Gummistreifen senkrecht zu der Thermoplastfläche abgezogen wurde. Die Ergebnisse sind in der Tabelle 2 wiedergegeben, wobei die Beurteilung folgendermaßen vorgenommen wurde:
- H: Haftung (Bruch im Kautschuk, d. h. kohäsiver Bruch; hohe Trennkraft)
- -: Nicht-Haftung (Bruch in der Grenzfläche zwischen Gummi und Polyester, d. h. adhäsiver Bruch; geringe bis sehr geringe Trennkraft)

**Tabelle 2**

| Beispiel | Kautschukmischung | Formmasse | | |
|---|---|---|---|---|
| | | A | B | C |
| 1 (Vgl.) | I | - | - | - |
| 2 (Vgl.) | II | - | - | - |
| 3 | III | - | H | H |
| 4 | IV | - | H | H |

## Patentansprüche

1. Verfahren zur Herstellung von Verbundgegenständen aus mindestens einer harten und mindestens einer weichen Komponente, wobei die harte Komponente auf einem thermoplastischen Polyester basiert, der aliphatische Doppelbindungen enthält, und die weiche Komponente ein Vulkanisat ist,
**dadurch gekennzeichnet,**
**daß** das Vulkanisat unter üblichen Vulkanisationsbedingungen im Kontakt mit der harten Komponente durch Vulkanisation einer Kautschukzusammensetzung hergestellt wird, die folgende Komponenten enthält:
I. 100 Gew.-Teile eines carboxyl- oder anhydridgruppenhaltigen Kautschuks,
II. 0 bis 300 Gew.-Teile Füllstoffe,
III. 1 bis 10 Gew.-Teile peroxidische Vulkanisationsmittel,
IV. 0 bis 150 Gew.-Teile Weichmacher, sowie
V. mehr als 4 Gew.-Teile einer di- oder polyfunktionellen Verbindung der allgemeinen Formel
R¹(-Z-CO-CR²=CR³R⁴)ₙ,
wobei
R¹ ein beliebiger zwei- oder mehrwertiger Rest oder eine direkte Bindung sein kann, R² bis R⁴ unabhängig voneinander Wasserstoff, Alkyl, Cycloalkyl oder Aryl mit jeweils maximal 20 C-Atomen sein können; Z kann Alkyl, Cycloalkyl, Aryl, S, NH oder 0 bedeuten, und n steht für Zahlen größer oder gleich 2, vorzugsweise 2 bis 4.

2. Verfahren gemäß Anspruch 1,
**dadurch gekennzeichnet,**
**daß** die harte Komponente ein Polyester, eine Polyesterformmasse, ein Polyesterblend oder ein Faserverbundwerkstoff mit Polyestermatrix ist.

3. Verfahren gemäß einem der vorhergehenden Ansprüche,
**dadurch gekennzeichnet,**
**daß** der thermoplastische Polyester eine Dicarbonsäurekomponente enthält, die auf Terephthalsäure basiert.

4. Verfahren gemäß Anspruch 3,
**dadurch gekennzeichnet,**
**daß** der thermoplastische Polyester eine Diolkomponente enthält, die zu 0 bis 99 Mol-% aus Butandiol-(1,4) und zu 1 bis 100 Mol-% aus Butendiol-(1,4) besteht.

5. Verfahren nach Anspruch 4,
**dadurch gekennzeichnet, daß** die Diolkomponente zu mindestens 8 Mol-% aus Butendiol-(1,4) besteht.

6. Verfahren nach Anspruch 4,
**dadurch gekennzeichnet, daß** die Diolkomponente zu mindestens 15 Mol-% aus Butendiol-(1,4) besteht.

7. Verfahren gemäß einem der vorhergehenden Ansprüche,
**dadurch gekennzeichnet,**
**daß** der carboxyl- oder anhydridgruppenhaltige Kautschuk während der Vulkanisation in situ hergestellt wird, indem ein unfunktionalisierter Kautschuk zusammen mit einer Verbindung eingesetzt wird, die mindestens eine C-C-Doppelbindung und/oder C-C-Dreifachbindung und mindestens eine Carboxyl- oder Anhydridgruppe enthält.

8. Verfahren gemäß einem der vorhergehenden Ansprüche,
**dadurch gekennzeichnet,**
**daß** der Kautschuk ein Ethylen-Propylen(-Dien)-Kautschuk [EP(D)M], ein Styrol-Butadien-Kautschuk (E-SBR bzw. L-SBR), ein Butadienkautschuk (BR), ein Naturkautschuk (NR), ein Isoprenkautschuk (IR), ein Isobuten-Isopren-Kautschuk (IIR), ein halogenierter Isobuten-lsopren-Kautschuk (CIIR bzw. BIIR), ein Nitrilkautschuk (NBR), ein Chloroprenkautschuk (CR), ein styrolhaltiges Blockcopolymer und/oder ein Polyalkenylen ist.

9. Verfahren gemäß einem der vorhergehenden Ansprüche,
**dadurch gekennzeichnet,**
**daß** der Kautschuk aus 30 bis 100 Gew.-Teilen eines EP(D)M-Kautschuks und 70 bis 0 Gew.-Teilen anderer Kautschuke besteht.

10. Verfahren gemäß einem der vorhergehenden Ansprüche,
**dadurch gekennzeichnet,**
**daß** die Komponente V. zu maximal 12 Gew.-Teilen, bezogen auf 100 Gew.-Teile Kautschuk, eingesetzt wird.

11. Verfahren gemäß einem der vorhergehenden Ansprüche,
**dadurch gekennzeichnet,**
**daß** die Kautschukzusammensetzung darüber hinaus Vulkanisationsverzögerer, Alterungsschutzmittel, Verarbeitungshilfsmittel, Entformungsmittel und/oder Treibmittel enthält.

12. Verfahren gemäß einem der vorhergehenden Ansprüche,
**dadurch gekennzeichnet,**
**daß** der Verbund im einstufigen oder im zweistufigen Prozeß hergestellt wird, wobei die Massetemperatur der Kautschukmischung im Zylinder im Bereich zwischen 40 und 80 °C und die Vulkanisationstemperatur im Bereich zwischen 140 und 200 °C liegen.

13. Verbundgegenstände, hergestellt nach einem der vorhergehenden Ansprüche.

## Claims

1. A process for producing composite articles made of at least one hard and at least one soft component, where the hard component is based on a thermoplastic polyester containing aliphatic double bonds and the soft component is a vulcanizate, **characterized in that** the vulcanizate is produced under conventional vulcanization conditions in contact with the hard component by vulcanization of a rubber composition which contains the following components:
I. 100 parts by weight of a rubber containing carboxyl or anhydride groups,
II. from 0 to 300 parts by weight of fillers,
III. from 1 to 10 parts by weight of peroxidic vulcanizers,
IV. from 0 to 150 parts by weight of plasticizers, and
V. more than 4 parts by weight of a difunctional or polyfunctional compound of the general formula
R¹(-Z-CO-CR²=CR³R⁴)ₙ,
where
R¹ can be any divalent or high-valent radical or a direct bond, R² to R⁴ can be, independently of one another, hydrogen, alkyl, cycloalkyl or aryl each having at most 20 carbon atoms; Z can be alkyl, cycloalkyl, aryl, S, NH or O, and n is a number greater than or equal to 2, preferably from 2 to 4.

2. A process according to claim 1, **characterized in that** the hard component is a polyester, a polyester moulding composition, a polyester blend or a fibre composite material having a polyester matrix.

3. A process according to either of the preceding claims, **characterized in that** the thermoplastic polyester contains a dicarboxylic acid component which is based on terephthalic acid.

4. A process according to claim 3, **characterized in that** the thermoplastic polyester contains a diol component which comprises from 0 to 99 mol % of butane-1,4-diol and from 1 to 100 mol % of butene-1,4-diol.

5. A process according to claim 4, **characterized in that** the diol component comprises at least 8 mol % of butene-1,4-diol.

6. A process according to claim 4, **characterized in that** the diol component comprises at least 15 mol % of butene-1,4-diol.

7. A process according to any one of the preceding claims, **characterized in that** the rubber containing carboxyl or anhydride groups is prepared in situ during vulcanization by using a non-functionalized rubber together with a compound which contains at least one C-C double bond and/or C-C triple bond and at least one carboxyl or anhydride group.

8. A process according to any one of the preceding claims, **characterized in that** the rubber is an ethylene-propylene(-diene) rubber [EP(D)M], a styrene-butadiene rubber (E-SBR or L-SBR), a butadiene rubber (BR), a natural rubber (NR), an isoprene rubber (IR), an isobutene-isoprene rubber (IIR), a halogenated isobutene-isoprene rubber (CIIR or BIIR), a nitrile rubber (NBR), a chloroprene rubber (CR), a styrene-containing block copolymer and/or a polyalkenylene.

9. A process according to any one of the preceding claims, **characterized in that** the rubber comprises from 30 to 100 parts by weight of an EP(D)M rubber and from 70 to 0 parts by weight of other rubbers.

10. A process according to any one of the preceding claims, **characterized in that** the component V. is used in an amount of at most 12 parts by weight based on 100 parts by weight of rubber.

11. A process according to any one of the preceding claims, **characterized in that** the rubber composition additionally contains vulcanization retarders, aging inhibitors, processing aids, mould release agents and/or blowing agents.

12. A process according to any one of the preceding claims, **characterized in that** the composite is produced in a single-stage or in a two-stage process in which the composition temperature of the rubber mixture in the barrel is in the range from 40 to 80°C and the vulcanization temperature is in the range from 140 to 200°C.

13. A composite article produced according to any one of the preceding claims.

## Revendications

1. Procédé de préparation d'objets composites à base d'au moins un composant dur et d'au moins un composant souple, dans lequel le composant dur est à base d'un polyester thermoplastique qui contient des double liaisons aliphatiques et dans lequel le composant souple est un produit de vulcanisation,
**caractérisé en ce que**
le produit de vulcanisation est préparé dans les conditions usuelles de vulcanisation, en contact avec le composant dur, par vulcanisation d'une composition de caoutchouc qui renferme les composants suivants :
I. 100 parties en poids d'un caoutchouc contenant des groupes carboxyle ou anhydride,
II. de 0 à 300 parties en poids de substances de remplissage,
III. de 1 à 10 parties en poids d'agents de vulcanisation peroxydique,
IV. de 0 à 150 parties en poids d'un agent plastifiant ainsi que,
V. plus de 4 parties en poids d'un composé di- ou polyfonctionnel de formule générale :
R¹(-Z-CO-CR²=CR³R⁴)ₙ
dans laquelle R¹ peut être un reste quelconque di- ou plurifonctionnel ou une liaison directe,
R² à R⁴ indépendamment l'un de l'autre, peuvent être de l'hydrogène, un alkyle, un cycloalkyle, ou un aryle avec à chaque fois au maximum 20 atomes de carbone ; Z peut signifier un alkyle, un cycloalkyle, un aryle, S, NH ou O et n représente des nombres supérieurs ou égaux à 2, de préférence de 2 à 4.

2. Procédé conformément à la revendication 1,
**caractérisé en ce que**
le composant dur est un polyester, une masse moulée en polyester, un mélange de polyester ou une substance composite de fibres avec une matrice de polyester.

3. Procédé selon l'une quelconque des revendications précédentes,
**caractérisé en ce que**
le polyester thermoplastique contient un composant acide dicarboxylique qui est à base d'acide téréphtalique.

4. Procédé selon la revendication 3,
**caractérisé en ce que**
le polyester thermoplastique contient un composant diol qui consiste pour de 0 à 99 % molaire en du butane diol-(1,4) et de 1 à 100 % molaire, en du butènediol-(1,4).

5. Procédé selon la revendication 4,
**caractérisé en ce que**
le composant diol consiste pour au moins 8 % molaire en du butane-diol-(1,4).

6. Procédé selon la revendication 4,
**caractérisé en ce que**
le composant diol consiste pour au moins 15 % molaire en du butènediol-(1,4).

7. Procédé selon l'une quelconque des revendications précédentes,
**caractérisé en ce que**
le caoutchouc contenant des groupes carboxylique ou anhydride est préparé pendant la vulcanisation « in situ », procédé dans lequel un caoutchouc non fonctionnalisé est mis en oeuvre conjointement avec un composé qui contient au moins une double liaison C-C et/ou une triple liaison C-C et au moins un groupe carboxyle ou anhydride.

8. Procédé selon l'une quelconque des revendications précédentes,
**caractérisé en ce que**
le caoutchouc est un caoutchouc éthylène-propylène(diène) [EP(D)M], un caoutchouc styrène-butadiène (E-SBR ou L-SBR), un caoutchouc butadiène (BR), un caoutchouc naturel (NR), un caoutchouc isoprène (IR), un caoutchouc isobutène-isoprène (IIR), un caoutchouc isobutène-isoprène halogéné (CIIR ou BIIR), un caoutchouc nitrile (NBR), un caoutchouc chloroprène (CR), un copolymère en blocs contenant du styrène et/ou un polyalkénylène.

9. Procédé selon l'une quelconque des revendications précédentes,
caxactérisé en ce que
le caoutchouc consiste en de 30 à 100 parties en poids d'un caoutchouc EP(D)M et de 70 à 0 parties en poids d'autres caoutchoucs.

10. Procédé selon l'une quelconque des revendications précédentes,
**caractérisé en ce que**
le composant V est mis en oeuvre au maximum pour 12 parties en poids par rapport à 100 parties en poids de caoutchouc.

11. Procédé selon l'une quelconque des revendications précédentes,
**caractérisé en ce que**
la composition de caoutchouc renferme en outre des retardateurs de vulcanisation des agents de protection contre le vieillissement, des adjuvants de façonnage, des agents de démoulage et/ou des agents moussants.

12. Procédé selon l'une quelconque des revendications précédentes,
**caractérisé en ce que**
le composite est produit dans un processus en une étape ou en deux étapes, dans lequel la température de la masse du mélange de caoutchoucs dans le cylindre, se situe dans la zone comprise entre 40 et 80°C, et la température de vulcanisation dans la zone comprise entre 140 et 200°C.

13. Objets composites produits selon l'une quelconque des revendications précédentes.
